# DEMANDE DE BREVET EUROPEEN

(11) **EP 1 076 314 A1**
(43) Date de publication de la demande: **14.02.2001**
(21) Numéro de dépôt: 99402031.1
(22) Date de dépôt: 10.08.1999
(51) Int. Cl.: G06K 17/00

(54) **Machine de personnalisation linéaire**

(71) Demandeur: Gilles Leroux S.A., 45400 Semoy (FR)
(72) Inventeur: Ormerod, Simon, 45470 Loury (FR); Perin, Francis, 45520 Gidy (FR); Bernard, Jean-Marc, 45380 La Chapelle St Mesmin (FR)
(74) Mandataire: Debay, Yves

(57) **Abrégé**

La présente invention concerne une machine de personnalisation linéaire, comportant un dispositif de transfert (3) d'objets portables (4), incorporant un circuit intégré caractérisée en ce qu'elle comporte un ascenseur de personnalisation (20) translaté verticalement et séquentiellement sur un support de guidage (70) par des moyens d'entraînement et de positionnement (24, 73, 28, 75, 72), ledit ascenseur (20) étant formé d'une plaque parallélépipédique (23) pourvue d'une pluralité de dispositifs de connexion mixte ou non (22i, 22n) au circuit intégré des objets portables (4), présentés de manière séquentielle devant une position d'entrée/sortie de la ligne de transfert.

## Description

La présente invention concerne une machine de personnalisation linéaire.

Les machines de personnalisation de l'art antérieur sont constituées d'un plateau rotatif comportant une pluralité de dispositifs de connexion associés chacun à une carte d'une pluralité de cartes à mémoire. Ces machines de personnalisation sont disposées dans une ligne de traitement de cartes comportant un dispositif dépileur, un poste de test électrique, deux postes d'éjection, un poste de retournement, un poste de marquage à encre et un poste empileur. En fonctionnement, le dispositif dépileur éjecte une carte à mémoire, à intervalles réguliers, sur un dispositif de transfert (3) d'objets portables. Au poste de test électrique, la qualité des puces électroniques des cartes est vérifiée. Les cartes à mémoire défectueuses sont expulsées du dispositif de la ligne de traitement alors que les cartes valides sont dirigées vers le poste de personnalisation. La personnalisation consiste à inscrire dans chaque carte à mémoire des instructions et/ou des informations qui lui sont propres ou qui sont propres à l'application. Ces informations sont introduites soit par l'intermédiaire d'ondes magnétiques dans des cartes sans contact, soit par l'intermédiaire d'aiguilles dans des cartes à contact, soit dans des cartes mixtes à contact et sans contact par l'un ou l'autre ou les deux moyens d'entrées. Après personnalisation, les cartes défectueuses sont éjectées par un nouveau poste d'éjection tandis que les cartes non défectueuses sont éventuellement retournées, pour être marquées à l'encre ou au laser au recto ou au verso, puis empilées dans un poste d'empilement. Un système informatique gère la personnalisation de l'ensemble des cartes. Une machine de personnalisation de ce type est enseignée par la demande de brevet FR 96 03410 du même déposant.

La présente invention a pour but de proposer une machine de personnalisation linéaire de construction plus simple et moins onéreuse. Cette machine de personnalisation linéaire peut être facilement adaptée en lieu et place d'une machine de personnalisation classique. De plus, cette machine de personnalisation est plus compacte, car prenant moins de place sur une ligne de traitement des cartes. Cet avantage permet de construire des lignes de traitement de cartes de plus petite longueur.

Ce but est atteint par le fait que la machine de personnalisation linéaire, comportant un dispositif de transfert d'objets portables, incorporant un circuit intégré, est caractérisée en ce qu'elle comporte un ascenseur de personnalisation translaté verticalement et séquentiellement sur un support de guidage par des moyens d'entraînement et de positionnement, ledit ascenseur étant formé d'une plaque parallélépipédique pourvue d'une pluralité de dispositifs de connexion mixte ou non au circuit intégré des objets portables, présentés de manière séquentielle devant une position d'entrée/sortie de la ligne de transfert.

Selon une particularité de la présente invention, ledit support de guidage est constitué d'une plaque parallélépipédique de longueur environ égale à deux fois la longueur dudit ascenseur de personnalisation, comportant une fente verticale, deux rails verticaux et deux poulies reliées entre elles par une courroie.

Selon une autre particularité, les moyens d'entraînement et de positionnement sont constitués d'un moyen de maintien et de coulissement dudit ascenseur dans lesdits rails dudit support de guidage, d'une attache d'entraînement fixant solidement l'ascenseur à la courroie du support de guidage, la fente verticale du support de guidage formant une voie pour l'attache d'entraînement dudit ascenseur, les moyens d'entraînement et de positionnement permettant d'arrêter chaque plateau fixe à la hauteur des objets portatifs et dans l'alignement dudit dispositif de transfert des objets portatifs.

Selon une autre particularité, ladite courroie dudit support de guidage est mise en mouvement périodiquement par un moteur électrique ou un autre moyen de puissance de manière à ce que les montées et les descentes dudit ascenseur le long du support de guidage sont régulièrement interrompues au niveau de la position d'entrée/sortie de la ligne de transfert pour permettre le chargement et déchargement des objets portables.

Selon une autre particularité, l'attache d'entraînement, située au centre de ladite plaque parallélépipédique, comporte à son extrémité un moyen d'ancrage à ladite courroie dudit support de guidage.

Un autre but de l'invention est de fournir une machine de personnalisation plus rapide. Ce but est atteint par le fait que la machine de personnalisation linéaire comporte un boîtier de décodage relié à chaque premier port parallèle de chaque carte de personnalisation par un bus d'adressage et un bus de données, lesdites cartes de personnalisation étant reliées en parallèle à un ordinateur de fond de panier par l'intermédiaire d'un second port parallèle. En effet, la forme de la présente machine de personnalisation assortie à un nouveau dispositif permet l'envoi en parallèle desdites informations de personnalisation.

Un troisième but de l'invention est de fournir une machine de personnalisation qui peut tester la qualité électrique d'une puce électronique ou la qualité d'une bande magnétique d'un objet portable avant et après sa personnalisation. Cette machine de personnalisation permet, de plus, de recommencer automatiquement la personnalisation d'une carte dont la personnalisation est défectueuse.

Ce but est atteint par le fait que les dispositifs de connexion permettent de tester les puces électroniques et d'activer les contacts électriques et/ou les bornes sans contact desdits objets portables.

Selon une particularité de l'invention, lorsque les dispositifs de connexion ont détecté un objet portable défectueux, celui-ci est déchargé dudit ascenseur avant sa personnalisation.

Selon une autre particularité, la machine de personnalisation comporte des moyens informatiques de commande et de gestion de la personnalisation.

Selon une autre particularité, lesdits moyens de commande et de gestion de la personnalisation déclenchent une séquence de substitution lorsqu'un défaut de personnalisation sur un objet portable est signalé.

Selon une autre particularité, les dispositifs de connexion testent la qualité de la personnalisation des objets portables et signalent aux moyens de commande et de gestion les défauts de personnalisation.

Selon une autre particularité, un poste d'éjection situé en sortie de ladite machine de personnalisation teste la qualité de la personnalisation des objets portables et signale aux moyens de commande et de gestion les défauts de personnalisation.

D'autres particularités et avantages de la présente invention apparaîtront plus clairement à la lecture de la description ci-après faite en référence aux dessins annexés dans lesquels :
- la figure 1 représente une vue de côté d'un ascenseur de personnalisation,
- la figure 2 représente une vue de face d'un support de guidage selon l'invention,
- la figure 3 représente une vue de côté d'un support de guidage selon la figure 2,
- la figure 4 représente une vue de côté de la machine de personnalisation linéaire dans une ligne de traitement des cartes,
- la figure 5 représente une vue de face de la machine de personnalisation linéaire conforme à la figure 4,
- la figure 6 représente le schéma des circuits électroniques nécessaires à la personnalisation de cartes avec ou sans contact ou mixtes.

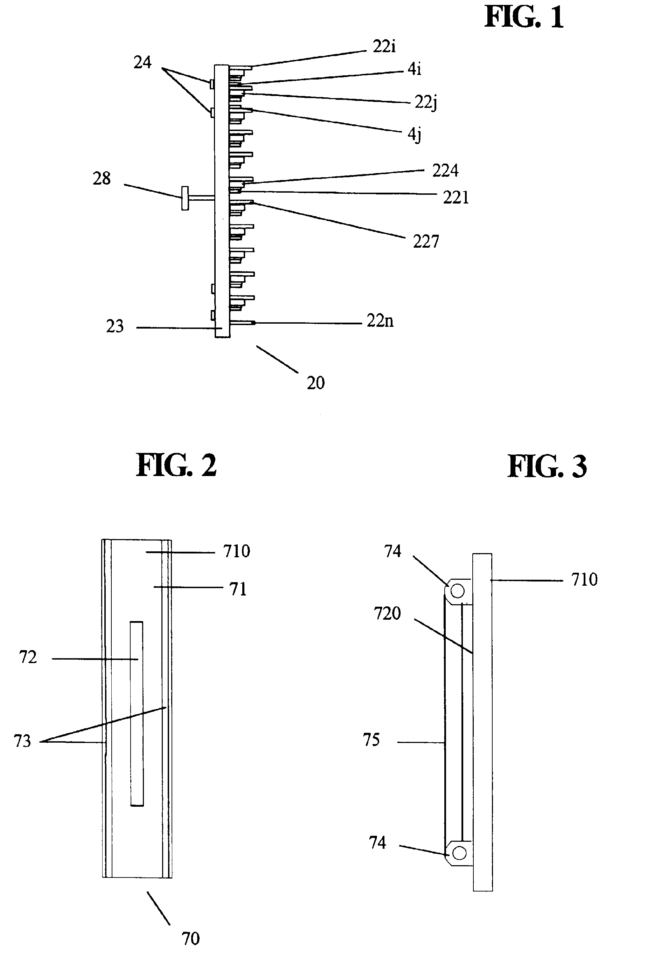

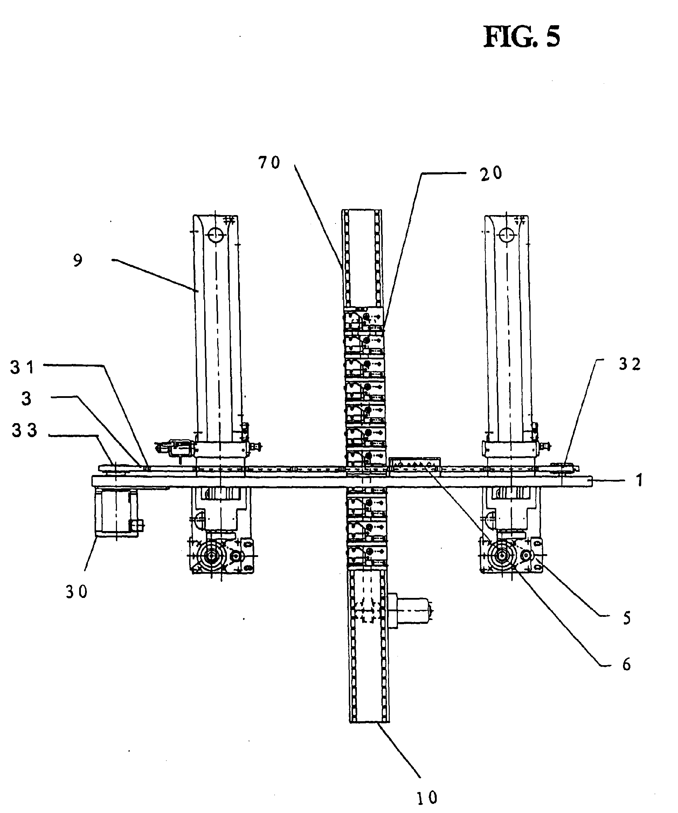

L'invention qui va être décrite en liaison avec les figures 1 à 6 est constituée d'une table (1) sur laquelle est disposée une ligne de traitement de cartes. La figure 5 représente une vue de face d'une ligne de traitement comportant successivement un poste dépileur (9) dans lequel les cartes sont stockées en pile avant leur personnalisation, une machine de personnalisation linéaire (10), un poste d'éjection (6) qui teste les cartes et expulse de la ligne de traitement les cartes défectueuses et enfin un empileur (5) de cartes personnalisées. Un dispositif de transfert (3) permet d'entraîner les cartes à mémoire d'un poste à un autre. Il est formé par une courroie crantée (31) continue circulant entre deux poulies (33, 32) entraînées par un moteur (30). Sur cette courroie (31) sans fin sont montés des taquets qui maintiennent les cartes pendant leur déplacement et permettent l'extraction et la dépose des cartes par chacune des têtes de personnalisation (22i, 22n) de l'ascenseur.

La machine de personnalisation comporte un ascenseur de personnalisation (20) translaté verticalement sur un support de guidage (70) par des moyens d'entraînement et de positionnement.

L'ascenseur de personnalisation (20), représenté sur la figure 1, est formé d'une plaque parallélépipédique (23) pourvue, sur une de ses faces de plus grande surface, d'une pluralité de dispositifs de connexion formant les têtes de personnalisation (22i, 22n) et, sur sa face opposée, d'une attache d'entraînement (28) et de moyens , par exemple latéraux, de guidage coulissant (24) dans un rail. Les moyens de maintien coulissant peuvent par exemple être constitués d'une glissière.

La personnalisation peut se faire pour des cartes dites "à puce" ou "à circuit intégré" dont le circuit intégré est relié au monde extérieur soit par des contacts dont les plages de contact sont reliées chacune par des conducteurs aux entrées du circuit intégré, soit par une antenne. Dans ce cas, la carte est dite "sans contact" et communique par ondes hertziennes ou ondes électromagnétiques avec une autre antenne reliée soit à un terminal soit à la machine de personnalisation. Soit encore la carte peut être mixte et comporter à la fois un moyen de connexion par contact à un terminal ou à la machine de personnalisation et un moyen de liaison sans contact au terminal ou à la machine de personnalisation. Ainsi, la machine de personnalisation, par l'utilisation des contacts (225) de la tête de connexion (224) ou par l'utilisation de l'antenne (2271) du plateau fixe (227), peut personnaliser des cartes avec contact, des cartes sans contact ou des cartes mixtes. Chaque dispositif de connexion (22i) comporte donc un plateau fixe (227) solidaire de la plaque (23), et une tête de connexion (224).

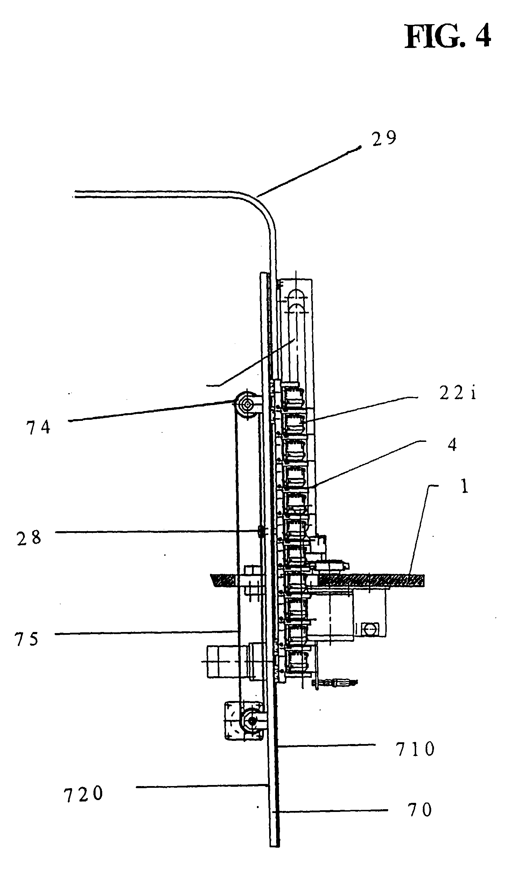

Les figures 2 et 3 représentent une vue de face et de côté du support de guidage (70). Il est constitué d'une plaque parallélépipédique (71) de longueur environ égale à deux fois la longueur de l'ascenseur de personnalisation (20). Ladite plaque (71) comporte, en son centre, une fente verticale (72) suffisamment large pour que l'attache d'entraînement (28) de l'ascenseur (20) puisse y pénétrer. La longueur de la fente (72) est environ égale à la longueur de l'ascenseur de personnalisation (20) de manière à ce que l'ascenseur (20) puisse coulisser de haut en bas sur toute la surface du support de guidage (70). D'autre part, deux rails verticaux (73) sont disposés sur la face (710) de plus grande surface de la plaque (71). Et la face (720) de la plaque (71) parallèle à la face (710), comporte deux poulies (74) reliées entre elles par une courroie (75).

En fonctionnement, l'ascenseur de personnalisation (20) est translaté verticalement sur le support de guidage (70). Pour cela, l'attache d'entraînement (28) de l'ascenseur (20) est introduit dans la fente (72) du support de guidage puis, est solidement ancré à la courroie (75). Enfin, la courroie (75) dudit support de guidage (70) est mise en mouvement à l'aide d'un moteur électrique ou un autre moyen de puissance . La courroie (75) entraîne dans son déplacement l'attache d'entraînement (28), ladite fente (72) formant une voie pour l'attache d'entraînement (28). Ainsi, par l'intermédiaire de la courroie (75) et de l'attache d'entraînement (28), le moyen de puissance entraîne l'ascenseur le long du support de guidage. L'alimentation du moteur est périodiquement coupée lorsque le plateau fixe (227) d'un dispositif de connexion (22i) libre ou respectivement occupé est à la hauteur des objets portables (4) situés dans le dispositif de transfert (3) de manière à permettre leurs chargement et respectivement déchargement sur l'ascenseur de personnalisation (20).

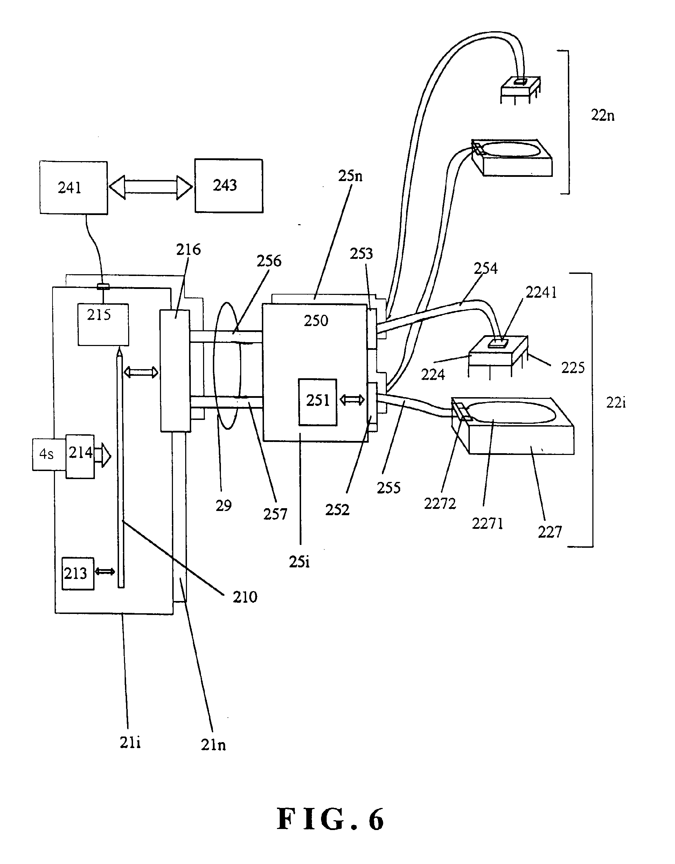

Les dispositifs de connexion (22i) comportent un plateau fixe (227) solidaire de la plaque parallélépipédique (23) et un élément mobile (221) supportant une tête de connexion (224). A chaque tête de connexion (224) et à chaque plateau fixe (227) d'un dispositif de connexion (22i, 22n) est associée une carte de personnalisation (21i, 21n) disposée dans un rack de personnalisation par un câble de connexion (29). Comme le montre la figure 6, chaque tête de connexion (224) comporte une pluralité d'aiguilles (225) montées sur des moyens élastiques et reliées électriquement à un connecteur (2241) qui assure la connexion avec une nappe de fil (254) reliée par un autre connecteur (253) à un boîtier de décodage (250) des adresses et d'aiguillage des données vers la tête dont l'adresse correspond à celle transmise sur le bus d'adresses. Le plateau fixe (227) est en matériau non conducteur, tel qu'une matière plastique et comporte, noyé dans sa masse, une antenne d'émission et de réception (2271) qui est reliée par un connecteur (2272) et un fil (255) à un second connecteur (252) du boîtier de décodage (250). Ce boîtier comporte un circuit d'interface d'antenne (251) et est relié aux cartes électroniques de personnalisation par un bus d'adressage (257) et un bus de données (256). Les bus d'adressage (257) et de données (256) constituant le câble (29) sont reliés aux cartes de personnalisation (21 i) par un port parallèle (216). Un bus (210) de la carte de personnalisation est également relié au port parallèle (216). Le bus (210) est aussi relié à un microprocesseur de la carte de personnalisation qui exécute le programme de personnalisation des cartes électroniques, lequel programme est chargé dans une mémoire (213) de la carte (21i). Enfin, le microprocesseur accède également, par l'intermédiaire du bus (210) et du connecteur (214) relié à ce bus (210), une carte à mémoire sécuritaire (4s), dite carte "mère", dont la fonction est de fournir les informations sécuritaires nécessaires à la personnalisation. Enfin, le bus (210) de chaque carte est relié par un port parallèle (215) à un ordinateur de fond de panier (241). Un autre ordinateur de type P.C. (243) en liaison parallèle avec le premier ordinateur gère la commande de la machine et reçoit les informations des différents dispositifs de positionnement et de détection tels que, par exemple, le dispositif permettant de s'assurer de la mise en place d'une carte sur le plateau fixe (227) d'un dispositif de connexion. Le programme de personnalisation chargé dans la mémoire (213) connaît les types de cartes et dispose d'un algorithme et d'instructions nécessaires pour adresser des informations aux dispositifs de connexion (22i, 22n) par le connecteur (253), respectivement (252) qui correspond au type de cartes à contact, respectivement sans contact. Dans le cas où les cartes sont mixtes , le boîtier de décodage (250) donnera accès à la carte par le connecteur à contact (253) pour la personnalisation de certaines parties dites "non-sécuritaires", et accédera à la carte par le connecteur (252) de liaison avec l'antenne pour transmettre par la partie sans contact des informations sécuritaires. Ces informations sécuritaires seront extraites d'une carte sécuritaire "mère" (4s) par le connecteur (214) lors de la personnalisation des fonctions ou applications dites "sécuritaires". Ainsi, le programme de personnalisation comprendra des moyens d'adresser sélectivement les informations sur l'un ou l'autre des connecteurs.

En fonctionnement, les cartes à mémoire sont chargées du dispositif de transfert (3) sur le plateau fixe (227) des dispositifs de connexion à l'aide d'un dispositif de chargement et de déchargement de cartes déjà connu. Ce dispositif , par exemple à vérin, permet de positionner correctement chaque carte sur la partie fixe (227) du dispositif de connexion (22i). Pour plus de détails sur ce dispositif de chargement et de déchargement des cartes, on peut se référer à la demande de brevet FR 9603410 du même déposant. Lorsqu'une carte (4i) est chargée sur le plateau fixe (227) du dispositif de connexion (22i), l'ascenseur (20) monte, respectivement descend, d'une distance égale à la distance séparant deux dispositifs de connexion contigus (22i, 22j) et une autre carte (4j) est chargée sur le plateau fixe (227) du dispositif de connexion suivant (22j). Ces étapes de monter, respectivement de descente, et de chargement d'une carte se répètent jusqu'à ce que tous les dispositifs de connexion soient chargés. Puis, l'ascenseur (20) descend, respectivement monte, de manière à ce que le premier dispositif de connexion soit au niveau de la ligne de transfert. La première carte (4i) qui a été chargée dans l'ascenseur, est déchargée du plateau fixe (227) du dispositif de connexion (22i) sur la ligne de transfert et une nouvelle carte à personnaliser est chargée sur le dispositif de connexion (22i). Pendant la phase de personnalisation de cette nouvelle carte, l'ascenseur (20) descend, respectivement monte, d'une distance égale à la distance séparant deux dispositifs de connexion contigus, et une nouvelle phase de déchargement d'une carte personnalisée et de chargement d'une carte non personnalisée commence.

Selon un autre mode réalisation de l'invention, le dispositif de connexion mixte de l'ascenseur de personnalisation comporte un dispositif de test électrique qui teste les cartes à mémoire dès leur arrivée sur le plateau fixe (227). Si la carte à mémoire chargée est défectueuse, elle est directement déchargée de l'ascenseur (20) sur le dispositif de transfert (3) puis expulsée par le poste d'éjection (6) et l'ascenseur de personnalisation est chargée d'une nouvelle carte à mémoire. Si cette carte est bonne, l'ascenseur monte ou descend de manière à ce qu'une nouvelle carte puisse être chargée sur le plateau fixe suivant.

D'autres modifications à la portée de l'homme de métier font également partie de l'esprit de l'invention.

## Revendications

1. Machine de personnalisation linéaire, comportant un dispositif de transfert (3) d'objets portables (4), incorporant un circuit intégré, caractérisée en ce qu'elle comporte un ascenseur de personnalisation (20) translaté verticalement et séquentiellement sur un support de guidage (70) par des moyens d'entraînement et de positionnement (24, 73, 28, 75, 72), ledit ascenseur (20) étant formé d'une plaque parallélépipédique (23) pourvue d'une pluralité de dispositifs de connexion mixte ou non (22i, 22n) au circuit intégré des objets portables (4), présentés de manière séquentielle devant une position d'entrée/sortie de la ligne de transfert.

2. Machine de personnalisation linéaire selon la revendication 1, caractérisée en ce ledit support de guidage (70) est constitué d'une plaque parallélépipédique (71) de longueur environ égale à deux fois la longueur dudit ascenseur de personnalisation (20), comportant une fente verticale (72), deux rails verticaux (73) et deux poulies (74) reliées entre elles par une courroie (75).

3. Machine de personnalisation linéaire selon la revendication 2, caractérisé en ce que les moyens d'entraînement et de positionnement sont constitués d'un moyen de maintien et de coulissement (24) dudit ascenseur dans lesdits rails (73) dudit support de guidage (70), d'une attache d'entraînement (28) fixant solidement l'ascenseur à la courroie (75) du support de guidage (70), la fente verticale (72) du support de guidage (70) formant une voie pour l'attache d'entraînement (28) dudit ascenseur (20), les moyens d'entraînement et de positionnement permettant d'arrêter chaque plateau fixe (227) à la hauteur des objets portatifs (4) et dans l'alignement dudit dispositif de transfert (3) des objets portatifs.

4. Machine de personnalisation linéaire selon les revendications 2 à 3, caractérisée en ce que ladite courroie (75) dudit support de guidage (70) est mise en mouvement périodiquement par un moteur électrique ou un autre moyen de puissance de manière à ce que les montées et les descentes dudit ascenseur (20) le long du support de guidage (70) sont régulièrement interrompues au niveau de la position d'entrée/sortie de la ligne de transfert pour permettre le chargement et déchargement des objets portables (4).

5. Machine de personnalisation linéaire selon les revendications 3 à 4, caractérisée en ce que l'attache d'entraînement (28), située au centre de ladite plaque parallélépipédique (23), comporte à son extrémité un moyen d'ancrage à ladite courroie (75) dudit support de guidage (70).

6. Machine de personnalisation linéaire selon la revendication 1, caractérisée en ce qu'elle comporte un boîtier de décodage (250) relié à chaque premier port parallèle (216) de chaque carte de personnalisation (21i) par un bus d'adressage (257) et un bus de données (256), lesdites cartes de personnalisation (21 i) étant reliées en parallèle à un ordinateur de fond de panier (241) par l'intermédiaire d'un second port parallèle (215).

7. Machine de personnalisation linéaire selon la revendication 1, caractérisée en ce que les dispositifs de connexion (22i) permettent de tester les puces électroniques et d'activer les contacts électriques et/ou les bornes sans contact desdits objets portables (4).

8. Machine de personnalisation linéaire selon la revendication 7, caractérisée en ce que lorsque les dispositifs de connexion (22i) ont détecté un objet portable (4) défectueux, celui-ci est déchargé dudit ascenseur (20) avant sa personnalisation.

9. Machine de personnalisation linéaire selon les revendications 1 à 8, caractérisée en ce qu'elle comporte des moyens informatiques de commande et de gestion de la personnalisation (243).

10. Machine de personnalisation linéaire selon la revendication 9, caractérisée en ce que lesdits moyens de commande et de gestion de la personnalisation (243) déclenchent une séquence de substitution lorsqu'un défaut de personnalisation sur un objet portable (4) est signalé.

11. Machine de personnalisation linéaire selon la revendication 10, caractérisée en ce que les dispositifs de connexion (22i) testent la qualité de la personnalisation des objets portables (4) et signalent aux moyens de commande et de gestion (243) les défauts de personnalisation.

12. Machine de personnalisation linéaire selon la revendication 9, caractérisée en ce qu'un poste d'éjection (6) situé en sortie de ladite machine de personnalisation (10) teste la qualité de la personnalisation des objets portables (4) et signale aux moyens de commande et de gestion (243) les défauts de personnalisation.
